# EUROPEAN PATENT APPLICATION

(11) **EP 1 475 651 A1**
(43) Date of publication of application: **10.11.2004**
(21) Application number: 03701735.7
(22) Date of filing: 16.01.2003
(51) Int. Cl.: G02B 6/12, G02B 7/00

(54) **WAVEGUIDE TYPE OPTICAL MODULE, AND TEMPERATURE CONTROL COMPONENT, AND TEMPERATURE CONTROL ELEMENT THEREOF**

(30) Priority: 24.01.2002 JP 2002015929; 18.12.2002 JP 2002367051
(71) Applicant: Ibiden Co., Ltd., Ogaki-shi, Gifu 503-0917 (JP)
(72) Inventor: MORI, Mikio, IBIDEN CO., LTD., Ibi-gun, Gifu 501-0601 (JP); SAKAMOTO, Hajime, IBIDEN CO., LTD., Ibi-gun, Gifu 501-0601 (JP); ITO, Yasutaka, IBIDEN CO., LTD., Ibi-gun, Gifu 501-0601 (JP)
(74) Representative: Grünecker, Kinkeldey, Stockmair & Schwanhäusser Anwaltssozietät
(86) International application number: PCT/JP2003/000300
(87) International publication number: WO 2003/062877

(57) **Abstract**

A waveguide type optical module is provided which includes a temperature control element supported on pedestals inside a casing, and an optical waveguide provided on the temperature control element. The heating control element includes a plate having a heater or heat absorber provided on a non-heating side thereof or buried therein. The plate is supported on the pedestals with less than 30% of the area thereof being in contact with the plate. Because of such a structure, the waveguide type optical module has a good wavelength demultiplexing characteristic, and the temperature controller and control element for use in the optical module incur less occurrence of particle separation and shows a high homogeneity of plate-surface temperature distribution.

## Description

### Field of the Invention

The present invention relates to a waveguide type optical module, a temperature controller and temperature control element for controlling the temperature of an optical waveguide having a temperature-dependent wavelength demultiplexing characteristic.

### Background Art

The conventional waveguide type optical module, especially, the quartz-array waveguide type optical module with an optical wavelength multi/demultiplexing function, uses a waveguide having a temperature-dependent wavelength demultiplexing characteristic. The waveguide type optical module of this type needs a temperature control of the waveguide for maintaining a required wavelength demultiplexing characteristic. Also an optical modulator or an optical switch, whose refractive index is adjusted by changing the temperature for the optical deflection, should have the temperature thereof adjusted for the refractive index not to vary. Both of these requires a temperature controller for adjusting the temperature of the optical waveguide.

Such a temperature controller is known from the disclosure in JP-A-2001-116936. The disclosed temperature controller is used in a quartz-array waveguide type optical module in which a heater is provided on a plate, which appears as a ceramic substrate, whose thermal expansion coefficient is 5 ppm/°C or less and thermal conductivity is 100 W/m·K or more, the plate is held on a pedestal and an optical waveguide is formed on the plate.

The conventional waveguide type optical module is designed only for providing a temperature controller made of a material having a small thermal expansion coefficient and a good thermal conductivity. Therefore, the temperature distribution is not homogeneous over the surface of the plate as the temperature control element. Thus, the waveguide inevitably incurs a distortion and has the wavelength demultiplexing characteristic thereof degraded.

Also, with an increased number of waveguides, the waveguide fixed on the plate has to be heated up to a predetermined temperature in a short time and held at the temperature. However, since heat is not efficiently conducted from the plate heated by a heater to the waveguide, so it is not possible to elevate the temperature of the waveguide to higher than a certain point.

More specifically, heat generated by the heater is conducted partially to the plate and also to the waveguide. The heat conducted to the plate will be dissipated to the external space via the pedestal. Therefore, even if the heater is designed to have an increased area and it is supplied with an increased amount of electric power, the heat generated by the heater will not effectively be conducted to the waveguide. So, the waveguide cannot be heated up to higher than a certain point.

Thus, a wavelength which should be demultiplexed is not demultiplexed to a core as a desired waveguide or causes optical signals to fail in functioning.

### Disclosure of the Invention

The present invention has a primary object to overcome the above-mentioned drawbacks of the related art by providing a waveguide type optical module suitable for a design having multiple optical waveguides and excellent in wavelength demultiplexing characteristic.

The present invention has another object to provide a temperature controller and temperature control element for use in the waveguide type optical module, incurring less occurrence of a particle count and showing a highly homogeneous distribution of temperature over the plate surface.

To overcome the drawbacks of the related art, the Inventors of the present invention made many experiments and researches and found that when the area of contact between the pedestal and plate was too large (32% or more), the temperature distribution was not homogeneous over the plate of the temperature control element and the temperature of the waveguide was not elevated to higher than a certain point. Also, the Inventors found that by reducing the contact area , the above drawbacks could be overcome and hence a waveguide type optical module could be provided which is excellent in wavelength demultiplexing characteristic.

The above object can be attained by providing a waveguide type optical module including a temperature control element supported on pedestal inside a casing, and an optical waveguide disposed in contact on the temperature control element, wherein:
the temperature control element is formed from a plate having a heater or heat absorber provided on a non-heating side thereof or buried therein; and
the plate is supported inside the casing so that the area of contact with the pedestal is less than 30% of the surface area of the plate.

Also the above object can be attained by providing a temperature controller for use in a waveguide type optical module, the temperature controller including a temperature control element held inside a casing and which includes a plate having a heater or heat absorber provided on a non-heating side thereof or buried therein; and
there is installed to the plate a pedestal for supporting the plate thereon so that the area of contact with the pedestal and the non-heating side of the plate is less than 30% of the surface area of the plate.

Also the above object can be attained by providing a temperature control element includes a plate having a heater or heat absorber provided on a non-heating side thereof or buried therein, wherein the plate is shaped so that the area of contact with a pedestal which support the plate thereon is less than 30% of the surface area of the plate.

In each of the above products according to the present invention, each pedestal should preferably be a one which is put into contact with the edge of the plate to support the latter. Further, the pedestal should more preferably be a one which is put into contact with the end face of the plate to support the latter.

Also, the plate should preferably be a ceramic-made one.

Also the above object can be attained by providing a waveguide type optical module including a temperature control element supported on a pedestal inside a casing, and an optical waveguide disposed in contact on the temperature control element, wherein:
the temperature control element includes a generally rectangular plate having a heater or heat absorber provided on a non-heating side thereof, buried therein; and
the pedestal supports the plate thereon in contact with each outer comer of the latter and so that the area of contact between the pedestal and plate is less than 30% of the surface area of the plate.

In the portion of each pedestal being in contact with the plate, when it is assumed that one side of the plate is α1 while the length of the contacting portion of the pedestal along the one side of the plate is α2, α2 should preferably be 5 to 40 % of α1, the total area of the pedestal preferably be within a range of 1 to 25 % of the surface area of the plate, and the area of each pedestal preferably be within a range of 0.4 to 7 % of the surface area of the plate.

According to the present invention, since the temperature control element includes the plate having the heater or heat absorber on the non-heating side thereof, or buried in, so the temperature of the plate can be increased and decreased relatively uniformly over the plate surface. Especially in case the heater or heat absorber is provided on the non-heating side (rear side) of the plate, the heating can be made more homogeneously since heat will be conducted while being dispersed over the plate surface when it is propagated to a heating side of the plate. That is, since the plate functions to disperse the heat, it is possible to prevent the heat from being distributed inhomogeneously due to a wiring patter of the heater of heat absorber.

Note that since inside the casing, the plate is supported in air being isolated by the pedestal from the bottom of the casing, so an air layer exists between the plate itself and casing bottom, which provides an effect of heat insulation. Thus, the plate is thermally insulated more effectively and homogeneous temperature distribution on the heating side can be assured and temperature elevation can be done at a higher rate.

According to the present invention, the area of contact between the pedestal and rear side of the plate is less than about 30% of the rear surface area of the plate, which is also intended for prevention of a cooling spot from being defined on the plate. If the area of contact between the pedestal and plate rear side exceeds 30% of the area surface area of the plate, the pedestal becomes a conductor of heat to the casing and thus the heat is dissipated to outside from the casing.

The area of contact between the pedestal and plate rear side should preferably be 0.5 to 25 % of the rear surface area of the plate because the plate made of ceramic, if applied, can incur less occurrence of a particle count as the contact area is thus decreased. It should be noted that it is necessary to reduce the particles adhering, if occur, to the end face of the waveguide and causing a propagation loss.

Also, the plate should preferably be shaped to be generally rectangular and be supported on the pedestal in contact with each outer comer thereof. In the portion of the pedestal being in contact with the plate, when it is assumed that one side of the plate has a length α1 while the contacting portion of each pedestal along the one side of the plate has a length α2, α2 should preferably be 5 to 40 % of α1, the total area of the pedestal preferably be within a range of 1 to 25 % of the surface area of the plate, and the area of each pedestal preferably be within a range of 0.4 to 6 % of the surface area of the plate.

With areas smaller than the above lower limits, the Inventors' reliability tests proved that misalignment between the pedestal and plate caused insufficient grounding and stability. On the other hand, with areas larger than the above upper limits, the above reliability tests also proved that the temperature of the plate could not be elevated slowly, not in a short time.

On this account, the pedestal is provided between the temperature control element and casing to isolate the latter, and the area of contact between the pedestal and plate is limited to as minimum as possible, thereby assuring a homogeneous temperature distribution over the surface of the plate as a temperature control element (heater plate) and a reduced time for heat elevation.

Note that the contact between the pedestal and plate may be an indirect contact using an adhesive or the like alternatively of the aforementioned one.

In the waveguide type optical module-oriented temperature controller and the waveguide type optical module itself according to the present invention, the pedestal should preferably support the plate in contact with the edge (outer edge) of the latter, and more preferably support the plate in contact with each outer comer of the latter.

The reason for the above lies in the fact that with only the edge (outer edge) of the plate (at the rear side) being in contact with the pedestal, heat dissipation through the pedestal is smaller and it is possible to prevent inhomogeneous temperature distribution over the plate. Further, with the plate being supported on the pedestal in contact with each of four outer comers thereof, heat dissipation through the pedestal is much smaller, so that heat conduction to the optical waveguide can be more effective.

Also, when only the rear-side edge (outer edge) of the plate is put in contact with the pedestal, a space is defined at the intermediate portion between the pedestal and air can be caused to stay in this space for storage of heat. As result, it is possible to effectively prevent inhomogeneous temperature distribution over the surface of the plate.

Also, the plate may be supported on the pedestal with the end face thereof placed on the pedestal. Generally, since the end face of the plate are exposed to the fluidic atmosphere such as air, so heat is easily dissipated from there and thus they will have the temperature thereof easily lowered. Thus, with the plate being placed in contact at the end face thereof with on the pedestal, it is possible to prevent the edge of the plate from being exposed to a highly fluidic atmosphere and thus effectively prevent the temperature at the plate edge from being lower.

These objects and other objects, features, and advantages of the present invention will become more apparent from the following detailed description of the preferred embodiments of the present invention when taken in conjunction with the accompanying drawings. It should be noted that the present invention is not limited to the embodiments but can freely be modified without departing from the scope and spirit thereof defined in the claims given later.

### Brief Description of the Drawings

FIG 1 is a plan view of one embodiment of the temperature controller according to the present invention.
FIG 2 is a sectional view of the pedestal shown in FIG. 1.
FIG 3 is a sectional side elevation of the temperature controller in FIG 1.
FIG. 4 is a sectional front view of the temperature controller.
FIG 5 is a sectional front view of a second embodiment of the temperature controller according to the present invention.
FIG 6 is also a sectional front view of a third embodiment of the temperature controller according to the present invention.
FIG 7 is a schematic plan view of a variant of the pedestal.
FIG 8 is a sectional view of an embodiment of the waveguide type optical module according to the present invention.
FIG 9 graphically illustrates the relation between the contact area ratio and ΔT in an example 1.
FIG 10 graphically illustrates the relation between the ratio between the pedestal height and plate thickness and ΔT in the example 1.
FIG 11 graphically illustrates the relation between the contact area ratio and ΔT in an example 2.
FIG 12 graphically illustrates the relation between the ratio between the pedestal height and plate thickness and ΔT in the example 2.
FIG 13 graphically illustrates the relation between the contact area ratio and ΔT in an example 3.
FIG 14 graphically illustrates the relation between the contact area ratio and ΔT in an example 4.
FIG. 15 graphically illustrates the rates of plate-surface temperature elevation in the examples 1 to 4 and comparative examples.

### Best Mode for Carrying Out the Invention

The preferred embodiments of the present invention will be described herebelow with reference to the accompanying drawings.

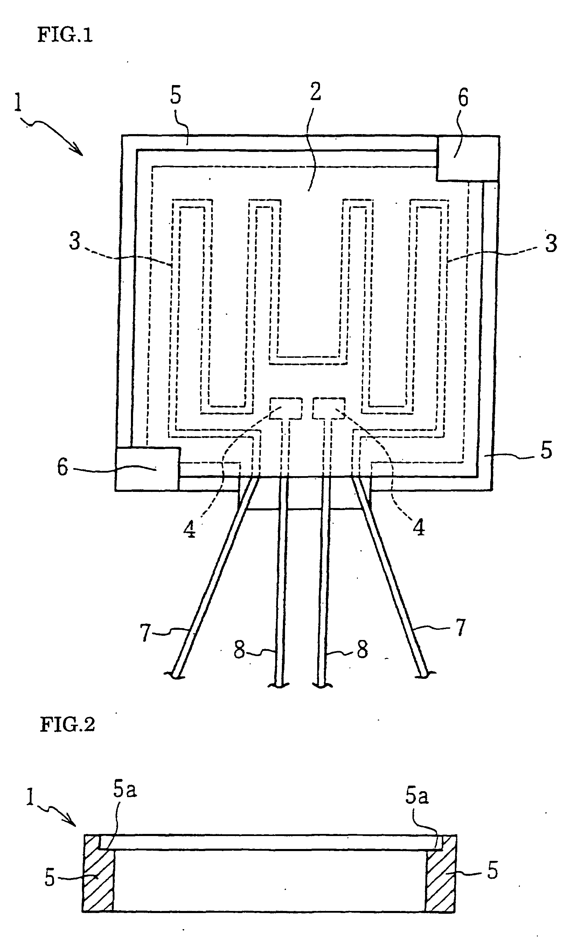

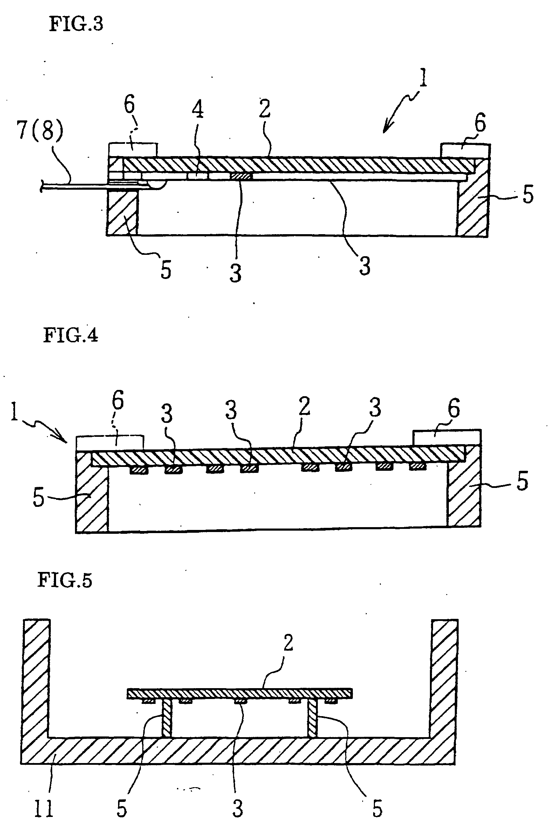

Referring now to FIG 1, there are illustrated in the form of a plan view the temperature controller and temperature control element for use in the waveguide type optical module according to the present invention. FIG. 2 is a sectional view of the pedestal, FIGS. 3 and 4 are sectional side elevation and sectional front view, respectively, of the temperature controller shown in FIG 1. As will be seen from these drawings, the temperature control element for use in the waveguide type optical module, generally indicated with a reference 1, typically includes a plate 2 and a heater 3 disposed on a side (rear side) opposite to a heating side of the plate 2 on which a waveguide is disposed. It should be noted however that a Peltier element as a heat absorber may be provided in place of the heater 3. Of course, the Peltier element has the functions of both the heater and heat absorber.

On the area (inner) of the plate 2 where the heater 3 is formed, there are provided pads 4 on which a thermistor chip and platinum resistance chip, used for measurement of a temperature, are mounted, heater power lead wires 7 for electrical connection with the pads 4, and thermistor lead wires 8. A thermistor chip and platinum resistance chip are mounted on the pads 4 to measure a temperature for the purpose of temperature control.

The plate 2 may be formed from a metal plate, ceramic plate, resin plate, or the like. Examples of the metal plate include an aluminum plate, copper plate and the like. Examples of the ceramic plate may include more than one selected from among a nitride ceramics, carbide ceramics, oxide ceramics and carbon. For example, since the nitride ceramics and carbide ceramics are smaller in thermal expansion coefficient than the metal and considerably greater in mechanical strength than the metal, a thin ceramic plate will not be warped or distorted even when heated. Therefore, the plate 2 can be formed from a thin and lightweight ceramic plate.

Further, such a ceramic plate is characterized in that the surface temperature thereof will quickly respond to a change in temperature of a resistance heater because of the high heat conductivity and small thickness of the ceramic plate.

Therefore, the ceramic plate can advantageously have the surface temperature thereof controlled when changing the temperature of the resistance heater by changing the voltage or current supplied to the heater.

Note that the nitride ceramics may be aluminum nitride, silicon nitride, boron nitride, titanium nitride or the like, for example, and they may be used singly or more than two of them be used in combination. Also, it should be noted that the carbide ceramics may be silicon carbide, boron carbide, titanium carbide, tantalum carbide, tungsten carbide or the like, for example and they may be used singly or more than two of them be used in combination.

Among the above materials, the aluminum nitride is most preferable for forming the plate 2 because it has a highest heat conductivity as 180 W/m.K and it is outstanding in temperature response.

Also, since the ceramic used as a material for the plate 2 shows a small thermal expansion coefficient and has only a small difference in thermal expansion from a waveguide 12 even when the temperature becomes high, the waveguide 12 will not be broken and separated from the temperature control element (plate) 1.

At the center inside a casing 9, the plate 2 is supported in air on a pedestal 5 shaped like a square frame (square column) in contact with the rear-side edge (outer edge) thereof. As shown in FIGS. 2 to 4, the pedestal 5 is cut out except for the edge thereof to form a step 5a (on which the edge of the plate 2 is placed). Namely, the pedestal 5 is countersunk at the upper side thereof except for the edge thereof. The plate 2 is fixed by fitting along the edge thereof to the step 5a and remaining top end of the pedestal 5 so that the upper surface of the plate 2 will be flush with the upper surface of the pedestal 5. Therefore, the stepped portion (5a) of the pedestal 5 will be in contact with both the rear-side edge (outer edge) and end face of the plate 2.

On the pedestal 5, there should preferably be formed a lead-in port for leading out the lead wires 7 for supplying power to the heater 3 or heat absorber and the lead wires 8 for supplying power to the thermistor chip. That is to say, all the rear-side edge (outer edge) of the plate 2 may not be in contact with the pedestal 5. It should be noted that the plate 2 should preferably be fixed with fixtures 6 to the pedestal 5.

FIGS. 3 and 4 are axial sectional views of the temperature controller whose temperature control element 1 is fixed to the pedestal 5. As shown, the temperature controller according to the present invention has the plate 2 wholly fixed by fitting to the step 5a in the pedestal 5. The temperature controller of the aforementioned structure is fixed in air on the pedestal 5 inside the casing 9.

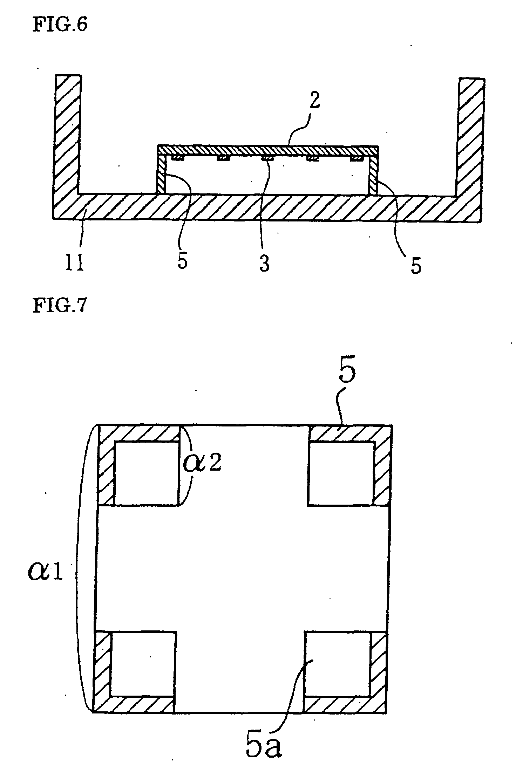

The pedestal 5 may be located inside a heater wiring area and at the rear side of the plate 2 as shown in FIG 5, or outside the heater wiring area and at the rear-side edge (outer edge) of the plate 2 as shown in FIG. 6. However, the plate 2 should more preferably be supported in air on the pedestal 5 in contact with the edge (outer edge) of the plate 2 than in contact with the rear side of the plate 2 inside the heater wiring area because the temperature is distributed more homogeneously over the surface of the plate 2.

In case the plate 2 is put in contact at the rear-side edge thereof (outer edge) with the pedestal 5 outside the heater wiring area, the distance from the heater 3 to the pedestal 5 over which the heat is conducted is so longer that the heat will be dispersed more and the amount of heat per unit area will be smaller. As the result, even if the plate is in contact at the same ratio of area with the pedestal 5, the amount of heat conducted to the pedestal 5 will also be smaller.

Also, since the plate 2 is fixed by fitting at the edge thereof to the step 5a formed in the upper portion of the frame-shaped pedestal 5, the edge of the plate 2 is not exposed to any fluidic atmosphere like air and the heat is stored with an improved efficiency, so that the heat will be distributed more homogeneously over the surface of the plate 2.

The pedestal 5 should advantageously be structured to have four square columns which are in contact with four rear-side comers, respectively, of the plate 2 as shown in FIG 7. The sum S0 (= S1 + S2 + S3 + S4) of sectional areas of the square columns, which are in contact with the plate 2, should desirably be less than 30% of the rear side area S of the plate 2, more desirably be within a range of 0.5 to 30 % of S, and most desirably be within a range of 4 to 25 % of S.

The reason for the above lies in the fact that when the sum of sectional areas exceeds 30%, heat is propagated to the casing and dissipated, which will influence the temperature elevation.

The columns are not limited in shape to the square but they may be formed as a circular or elliptical cylinder which can support the plate 2 in contact with the rear side of the latter.

The shape of the pedestal is not limited in shape to the above square column, but it may be circular cylinder, elliptic cylinder or the like. The pedestal shape may be a one which assures the sum S0 of sectional areas of the pedestal which are in contact with the rear side of the plate 2 to be within the above-mentioned range.

Also, the sectional areas (S1, S2, S3 and S4) of the four square columns, which are to be in contact with the plate, should desirably be within a range of 0.4 to 7 % of the rear side area S of the plate for the reason that when the contact sectional area is below 0.4%, the pedestals cannot support the plate stably while a contact sectional area of above 7% will influence the temperature elevation.

Also, in case the plate 2 has a square section (one side has a length α1) and each of the square columns has a square section (one side has a length α2), it is desirable that 0.05 ≤ α2/α1 ≤ 0.4 because the α2/α1 ratio of less than 0.05 (5%) will not assure any stable support of the plate while the ratio of more than 0.4 (40%) will influence the temperature elevation.

The plate 2 should desirably have a thickness of 0.1 to 10 mm. This is because if the plate thickness is over 10 mm, the plate 2 will have a larger heat capacity so that the temperature distribution over the plate surface will not be homogeneous while a plate thickness of less than 0.1 mm will cause a homogeneous temperature distribution approximate to those on the heater or heat absorber, also leading to an inhomogeneous temperature distribution.

The thickness 1 of the plate 2 and height L of the pedestal 5 should desirably be in a relation of approximately L ≥ 2.5 × 1. If the relation is L < 2.5 × 1, the heat insulation or heat storage by the air layer will be insufficient. According to the present invention, it is desirable that 1 = 0.635 mm and L = 3.2 mm.

The pedestal 5 may be formed from ceramic, metal or resin or the like but the heat conductivity of such a material should desirably be less than 50 W/m·K which will not lead to any heat conduction-caused occurrence of a homogeneous temperature distribution on the plate. The ceramics may be an alumina, quartz, cordierite or the like. Also, even when a silicon carbide (SiC) or aluminum nitride (AlN), having a high heat conductivity, is used to form the pedestal 5, the heat conductivity can be lowered by processing this material into a porous one. The metal may be a one whose heat conductivity is low, such as a nickel (Ni) alloy. Further, the resin may be glass epoxy or glass polyimide. In this case, the pedestal 5 is formed by punching and countersinking the resin substrate.

According to the present invention, the heater 3 may be formed on the non-heating side (rear side) of the plate 2 or buried in the plate 2. In case the heater 3 is formed buried in the plate 2, it should desirably be formed at a depth of less than 60% of the plate thickness from the side of the plate opposite to the heating side (far from the heating side). If it is buried at a depth of more than 60%, namely, if it is positioned too near to the heating side, the heat in the plate 2 will not sufficiently be dissipated, causing an inhomogeneous temperature distribution on the heating side.

In case the heater 3 is formed buried in the plate 2 as above, a plurality of heater layers may be provided. In this case, the pattern of each layer should desirably be such that a resistance heater is formed in any of the layers and each layer appears to include one resistance heater when viewed from the heating side of the plate 2. Such a pattern may be a zigzag layout, for example.

Note that the heater 3 may be buried in the plate 2 and partially exposed to outside the plate 2.

Note that in case the heater 3 is formed on the surface of the plate 2, it is preferable that a conductive paste containing metal particles should be applied to the surface of the plate 2 to form a conductive paste layer having a predetermined pattern, and then the conductive paste pattern be baked to sinter the metal particles on the plate surface. It should be noted that the metal sintering may be such that the metal particles, and the metal particles and ceramics, are welded to each other.

In case the heater 3 is buried in the plate 2, its thickness should preferably be within a range of 1 to 50 µm. When the heater 3 is to be formed on the surface of the plate 2, its thickness should preferably be within a range of 1 to 30 µm, and more preferably within a range of 1 to 10 µm.

In case the heater 3 is formed buried in the plate 2, its width should preferably be within a range of 5 to 20 µm. On the other hand, in case the heater 3 is formed on the surface of the plate 2, its width should preferably be within a range of 1 to 20 mm, and more preferably within a range of 0.1 to 5 mm.

The heater 3 can be varied in resistance by changing its width and thickness. However, the aforementioned thickness and width are most practical ones. The smaller the thickness and width, the higher the resistance becomes. In this respect, when it is formed buried in the plate, the heater can be thicker and wider but the surface temperature distribution will be correspondingly inhomogeneous. In this case, it is necessary to design the heater which has an increased width. Also, since the heater is buried in the plate, no consideration has to be paid to the adherence to the nitride ceramics or the like, the heater 3 may be formed from a high melting-point metal such as tungsten, molybdenum or the like or a carbide such as a carbide of tungsten, molybdenum or the like, and thus the resistance of the heater 3 can be increased. Therefore, the heater 3 may be formed thick against breakage. Accordingly, the heater 3 should desirably be formed to have the aforementioned thickness and width.

With the heater being positioned as above, as the heat generated by the heater is propagated, it will be dispersed to the entire plate and the temperature will be distributed homogeneously over the side thereof heating the waveguide.

The heater may have a sectional form, either rectangular or elliptic but the section should desirably be flat since this form contributes to an easier heat dissipation toward the heating side of the plate and a homogeneous temperature distribution on the heating side. Also, the material of the resistance heater is not limited to the conductive paste but it should preferably contain resin, solvent, thickener, etc. in addition to metal particles or conductive ceramics which add to an electro-conductivity of the heater.

The metal particles as a material of the heater 3 should desirably be a noble metal (such as gold, silver, platinum or palladium), lead, tungsten, molybdenum, nickel or the like. Among others, the material should more preferably be one of the noble metals (gold, silver, platinum and palladium). These metals may be used singly or in combination, but more than two of them should desirably be used in combination since they are not easily oxidizable and has a sufficient resistance for heat generation. The above-mentioned conductive ceramics include carbides of tungsten and molybdenum. These ceramics may be used singly or more than two of them be used in combination.

Also, the size of the metal or ceramic particles should preferably be within a range of 0.1 to 100 µm. If the size is less than 0.1 µm, the particles are easily oxidizable. On the other hand, the particles of more than 100 µm in size are not easy to sinter and have a higher resistance.

The metal particles may be either globular or squamate, or may include globular and squamate ones. The squamate or globular/squamate metal particles can hold metal oxide between them, and contribute to a positive adherence between the resistance heater and nitride ceramics or the like as well as to an increase resistance of the heater.

The resins usable to make the conductive paste includes epoxy resin, phenol resin, etc., for example. Also, the solvent may be isopropyl alcohol or the like, for example. The thickener may be cellulose or the like. The conductive paste should desirably be formed by adding a metal oxide to metal particles and sintering the metal particles and metal oxide. By sintering the metal oxide along with the metal particles, the metal particles can be made to adhere to the nitride ceramics (ceramic substrate) or carbide ceramics. By mixing the metal oxide in the conductive paste in this way, the adherence of the paste to the nitride ceramics or carbide ceramics can be improved although the reason is not known exactly. Presumably, the surface of each metal particle and nitride or carbide ceramics is slightly oxidized to form an oxide film and thus the oxide films are integrated with each other via the metal oxide when the materials are sintered, so that the metal particles and nitride or carbide ceramics will adhere to each other.

The metal oxide should preferably be at least one selected from a group of lead oxide, zinc oxide, silica, boron oxide (B₂O₃), alumina, yttria and titania, for example. These oxides permits to improve the adherence between the metal particles and nitride or carbide ceramics without increasing the resistance of the resistance heater. When the total amount of the metal oxide is taken as 100% by weight, the amounts of the above-mentioned metal oxides, namely, lead oxide, zinc oxide, silica, boron oxide (B₂O₃), alumina, yttria and titania should desirably be adjusted to 1 to 10 % by weight, 20 to 70 % by weight, 1 to 30 % by weight, 5 to 50 % by weight, 1 to 10 % by weight, 1 to 50 % by weight and 1 to 50 % by weight, respectively, with the sum thereof being not over 100% by weight. By adjusting the amounts of these oxides within the above ranges, respectively, it is possible to improve the adherence of the metal particles, especially with the nitride ceramics.

The addition of the metal oxide to the metal particles should preferably be within a range over 0.1% by weight and under 10% by weight. Also, the heater may be formed from a metal foil or wire. The metal foil may be a nickel foil or stainless steel foil. It should desirably be etched to form a pattern of the resistance heater. The metal foils thus patterned may be attached to each other to form the resistance heater. The metal wire may be a tungsten or molybdenum wire, for example.

In case the heater is formed on the surface of the plate 2, a metal coating layer should desirably be formed on the surface of the heater in order to prevent the internal sintered metal from being oxidized and having the resistance thereof changed. The metal coating layer should preferably be 0.1 to 10 µm thick. The metal used to for the metal coating layer is not limited to any special one but it may be any metal which is non-oxidizable. More specifically, the metal may be gold, silver, palladium, platinum, nickel or the like, for example. These metals may be used singly or two or more of them be used in combination. Among others, nickel should preferably be used to form the metal coating layer.

The heater has to be connected to the lead wires 7 for connection to the power source. The connection is made by soldering or brazing. A heat absorber may be used instead of the heater having previously been described. In this case, the heat absorber may be a Peltier element. The Peltier element may be connected to the lead wires 7 with an adhesive or any physical means such as screw or spring.

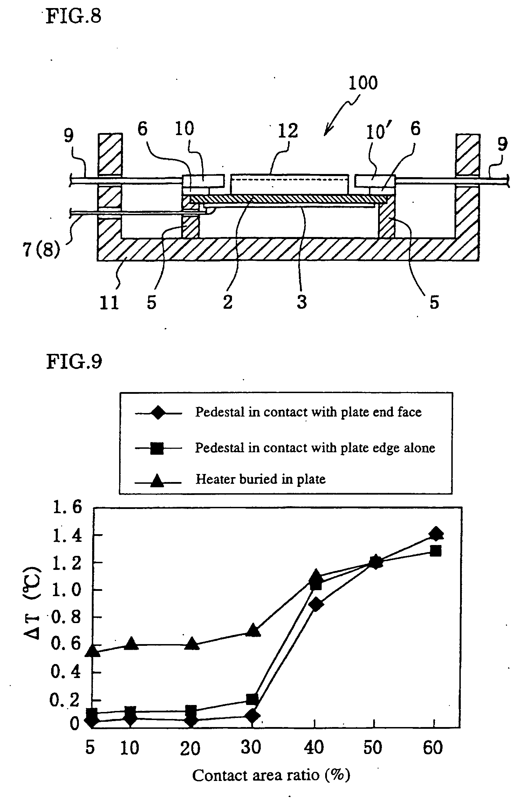

Referring now to FIG 8, there is illustrated in the form of a sectional view a typical embodiment of the waveguide type optical module according to the present invention. As shown, the waveguide type optical module generally indicated with a reference 100 includes primarily the aforementioned temperature controller composed of the temperature control element 1 and pedestal 5, Y-branched waveguide 12 and casing 11. The waveguide 12 is connected to an input optical fiber 9 and output optical fiber 9', for example, to multiplex and demultiplex the light. The waveguide 12 should advantageously be a quartz-array waveguide of which the wavelength demultiplexing characteristic varies depending upon the temperature. It should be noted that in FIG 8, references 10 and 10' indicate fiber fixtures.

The casing 11 is of a box-shaped structure having a lead-out port through which the input and output optical fibers 9 and 9' and lead wires 7 and 8 are led out. Inside the casing 11, the temperature control element 1 is supported in air on the pedestal 5 and the waveguide 12 is fixed in contact on the heating side surface of the temperature control element 1.

Because of such a structure of the waveguide type optical module 100, the heat homogeneously distributed over the plate surface of the temperature control element 1 can homogeneously be conducted to the waveguide 12 in a short time, whereby the heat dissipation and power consumption can considerably be reduced. Thus, the wavelength variation in the wavelength demultiplexing characteristic of the waveguide 12 can be limited to positively stabilize the wavelength demultiplexing characteristic.

In the foregoing, some embodiments of the present invention have been described. However, the present invention is not limited to such embodiments but can be modified or altered in various forms. For example, the optical waveguide 12 may be formed from polyimide fluoride or the like in addition to the aforementioned quartz, and the light may be a semiconductor laser light.

Also, the optical waveguide 12 and temperature control element 1 may be joined to each other with a mechanical fixture such as screw or spring in addition to the adhesive.

The present invention will be described in further detail concerning examples of the waveguide type optical module.

### Example 1:

(1) There was prepared a paste formed from a mixture of aluminum nitride powder (by Tokuyama, 1.1 µm in mean particle size) in 100% by weight, yttrium oxide (Y₂O₃): yttria, 0.4 µm in mean particle size) in 4% by weight, acrylic resin binder in 11.5% by weight, dispersant in 0.5% by weight and alcohol of 1-butanol and ethanol in 53% by weight. It was dry-sprayed. Granules thus produced were filled in a mold to form a raw molding of 1.5 mm in thickness. The raw molding was sintered in a nitrogen atmosphere at a temperature of 1890°C for 3 hours under a pressure of 200 kg/m². Thereafter, the sintered product was cut into a square ceramic plate 2 (for a substrate of the temperature control element) of 0.64 mm in thickness and 50.3 mm in side length.

(2) On the non-heating side (rear side) of the ceramic plate 2 prepared as above, there was formed a conductive paste layer for the heater 3 by screen printing. The heating pattern by the printed conductive paste was as shown in FIG. 1. The conductive paste used was a composition of Ag in 48% by weight, Pt in 21% by eight, SiO₂ in 1.0% by weight, B₂O₃ in 1.2% by weight, ZnO in 4.1 % by weight, PbO in 3.4 % by weight, ethyl acetate in 3.4% by weight and butyl carbinol in 17.9% by weight. The conductive paste is an Ag-Pt paste in which silver particles were 4.5 µm in mean particle size and squamate and Pt particles were 0.5 µm in mean particle size.

(3) After a pattern of the heater was formed from the conductive paste, the ceramic plate 2 was heated and calcinated at 780°C to sinter Ag and Pt in the conductive paste while baking the paste to the surface of the ceramic plate 2, to thereby form a so-called resistance heater 3 and thermistor circuit. The resistance heater 3 has a thickness of 5 µm and width of 2.4 mm and a sheet resistivity of 7.7 mΩ/□.

(4) The ceramic plate 2 prepared in above step (3) was immersed in an electroless nickel-plating bath filled with an aqueous solution containing 80 g/l of nickel sulfate, 24 g/l of sodium hypophosphite, 12 g/l of sodium acetate, 8 g/l of boric acid and 6 g/l of ammonium chloride to deposit a metal coating layer (nickel layer) of 1 µm in thickness on the surfaces of the silver resistance heater 3, thermistor circuit and thermistor pad.

(5) A solder paste was printed on the thermistor pad, and a thermistor was placed on the solder paste over the thermistor pad. The thermistor and thermistor pad were heated to 200°C to mount the thermistor on the thermistor pad. Further, the lead wires 7 and 8 were connected by brazing to the thermistor circuit and heater circuit to form the temperature control element 1 (ceramic heater).

(6) Next, a glass epoxy substrate (by Matsushita Electric Works, FR-4) was cut into a square piece. The epoxy substrate piece was punched at the center thereof to form a square frame, and the square frame was countersunk except for the edge thereof to a depth of about 0.64 mm at the upper side along the edge thereof using a drill to form a pedestal 5 with a step 5a.

The pedestal 5 with the step 5a was used to support the temperature control element 1 prepared in above step (5). The ceramic plate 2 was fixed by fitting at the edge thereof to the step 5a.

Note that a lead-out port for leading out the lead wires 7 and 8 was formed at the same time by countersinking.

(7) The temperature control element 1 (ceramic heater) fixed by fitting to the step 5a of the pedestal 5 was fixed at the diagonal comers thereof with a glass epoxy fixture (retainer 6) to form a temperature controller.

(8) Further, the temperature controller (pedestal 5) was fixed by bonding with an adhesive in the box-shaped stainless steel casing 11, and a Y-branched quartz-array optical waveguide 12 was put over the temperature control element 1 and fixed with a silicon resin adhesive to the latter. Thus, a waveguide type optical module was formed.

(a) To test the example 1 for the homogeneity of plate-surface temperature distribution, the glass epoxy substrate was punched in the center thereof to form an opening there. By punching the glass epoxy substrate to form an opening of another diameter, and repeating such punching, to change the opening area, the area of contact between the pedestal 5 and ceramic plate 2 was changed from 5 to 60 % of the rear-surface area of the ceramic plate 2.

More specifically, several types of the pedestal 5 were prepared in which the ratios in area of contact between the pedestal 5 and ceramic plate 2 with the rear-surface area of the ceramic plate 2 (will be referred to simply as "contact area ratio" hereunder) were within a range of 5 to 60 %. The homogeneity of plate-surface temperature distribution was measured with the ceramic plate 2 supported on each of the pedestals 5 different in contact area ratio from each other.

In the example 1, the pedestal 5 was in contact with the ceramic plate 2 at the edge and end face of the latter (will be referred to as "end face" hereunder). In addition to the pedestals which were in contact with the ceramic plate as above, there were prepared a pedestal which was in contact with the plate 2 at an inner portion of the latter (nearer to the center) (as shown in FIG 5) and a pedestal which was in contact with the plate 2 at the edge of the latter (as shown in FIG. 6). Several types of such pedestals 5 each having contact area ratios of 5 to 60 % were prepared. The homogeneity of plate-surface temperature distribution was measured with the ceramic plate 2 supported on each of such additional pedestals 5.

Note that the pedestals each having a contact area ratio of less than 30% were taken as acceptable ones while the pedestals each having a contact area ratio of more than 30% were taken as comparative ones.

(b) Also, with the height of the plate 2 supported on the pedestal 5 inside the casing 11 being adjusted, the plate-surface temperature distribution was measured using a thermo-viewer set to 80°C and a difference ΔT was calculated between highest and lowest temperatures over the plate surface.

Note that in case no pedestal 5 was used, namely, in case the plate 2 was placed in direct contact with the casing 11, the temperature difference ΔT was 3°C.

(c) Further, the number of particles appearing separated from the ceramic adhering to the waveguide 12 was counted. For this measurement, ten freely-selected places on the surface of the waveguide 12 were photographed by an electron microscope, and the particles in each place were counted. The numbers of particles counted in the ten places were averaged as a particle count.

### Example 2:

The example 2 was tested under basically same conditions as in the testing on the example 1 except that a Peltier element was used instead of the heater 3. The Peltier element was fixed with an epoxy resin adhesive to the plate. Also, since cooling, not heating, was made in this example 2, the homogeneity of plate-surface temperature distribution was measured by calculating the difference ΔT between highest and lowest temperatures with the thermo-viewer set to 5°C.

### Example 3:

The example 3 was tested under basically same conditions as in the testing on the example 1 except that the plate was formed from silicone carbide, not from the aluminum nitride.

A paste was prepared from a mixture of silicon carbide (by Yakushima Electric, 1.1 µm in mean particle size) in 100% by weight, B₄C (1 µm in mean particle size) in 4% by weight, acrylic resin binder in 11.5% by weight, dispersant in 0.5% by weight and alcohol containing 1-buthanol and ethanol in 53% by weight. It was molded by the doctor blade method to form a plurality of raw moldings of 0.47 mm in thickness.

Next, the raw moldings were dried at 80°C for 5 hours, and were punched to form a portion which would be a lead-out port through which connection is to be made external terminals.

Then, a conductive paste formed from a mixture of tungsten carbide particles of 1.1 µm in mean particle size in 100% by weight, acrylic resin binder in 3.0% by weight, α-terpineol solvent in 3.5% by weight and dispersant in 0.3% by weight was filled in the punched portion for the lead-out port in the raw moldings to form a conductive paste layer for a wiring pattern and a pad on which a heater 3 and thermistor were to be mounted.

Next, the raw moldings were stacked one on another. The stack was sintered by heating in a nitrogen atmosphere at 1980°C under a pressure of 200 kg/cm² to form a ceramic plate 2. Then the ceramic plate 2 was cut for the mounting pad to be exposed to outside, and a thermistor was mounted on the pad to form a temperature control element 1 of 1.5 mm in thickness.

### Example 4:

The example 4 was tested under basically same conditions as in the testing on the example 1 except that the pedestal 5 was designed to support the ceramic plate 2 at four outer comers of the latter.

Namely, a glass epoxy substrate (by Matsushita Electric Works, FR-4) of 3.3 mm in thickness was cut into a square piece of 20 mm by 20 mm in dimensions. The epoxy substrate piece was punched at the center thereof to form a square frame, and the square frame was countersunk except for the edge thereof to a depth of about 0.64 mm at the upper side along the edge thereof using a drill to form four pedestals 5 each with a step 5a, identical in shape to each other and having dimensions of 10 mm by 10 mm. The pedestals 5 were fixed by bonding to an epoxy substrate somewhat larger than the ceramic plate 2 in a geometry in which they correspond to the four comers, respectively, of the ceramic plate 2.

After fixing, by fitting, the ceramic plate 2 at the four corners thereof to the steps 5a, respectively, of the pedestals 5, the comers were fixed each with an epoxy resin fixture (retainer 6) to form a temperature controller.

Further, the temperature controller (pedestal 5) was fixed by bonding with an epoxy resin adhesive in the box-shaped stainless steel casing 11, and a Y-branched quartz-array optical waveguide 12 was put over the temperature control element 1 and fixed with a silicon resin adhesive to the latter. Thus, a waveguide type optical module was formed.

### Test results:

In the testing on the aforementioned examples 1 to 4, the highest and lowest plate-surface temperatures were measured and a difference ΔT between the temperature was calculated. The results are shown in FIGS. 9 to 14.

FIG 9 shows the relation between the difference ΔT and each of contact area ratios (%) (5, 10, 20, 30, 40, 50 and 60) in case the plate 2 is supported on each pedestal 5 in contact with the end face, a portion inwardly away from the edge and the edge, respectively, thereof in the example 1.

In the acceptable examples in which the contact area ratio is less than 30%, the difference ΔT was almost constant and a homogeneous temperature distribution over the plate surface was maintained irrespectively of how the plate and pedestal were in contact with each other. However, in comparative examples in which the contact area ratio was over 30%, the difference ΔT was suddenly larger and the homogeneity of plate-surface temperature distribution was low.

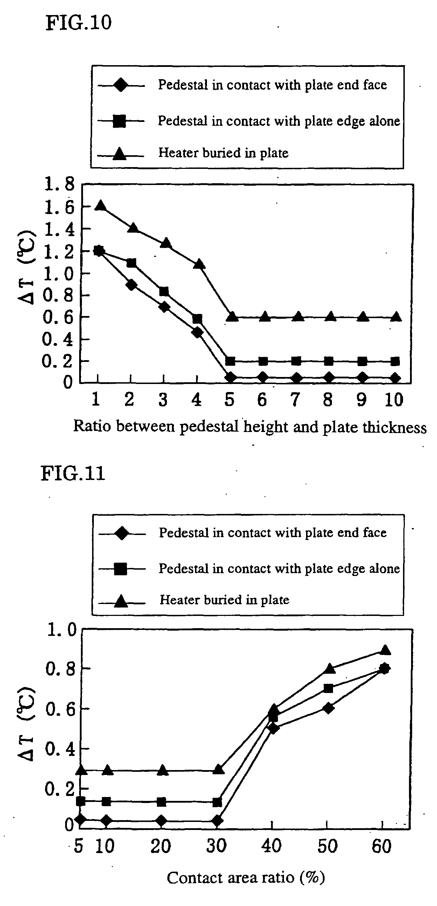

FIG 10 shows the relation between the ratio between the pedestal height L and plate thickness and the difference ΔT in the example 1. As will be known from the graphically illustrated relation, the difference ΔT was smaller when the pedestal height was larger (when the plate was supported in air at a larger height).

FIG 11 shows the relation between the contact area ratio and ΔT in the example 2. The example 2 showed almost the same tendency as that in FIG 9 for the example 1 although it used pedestals whose contact area ratio was within the range of 10 to 60 %.

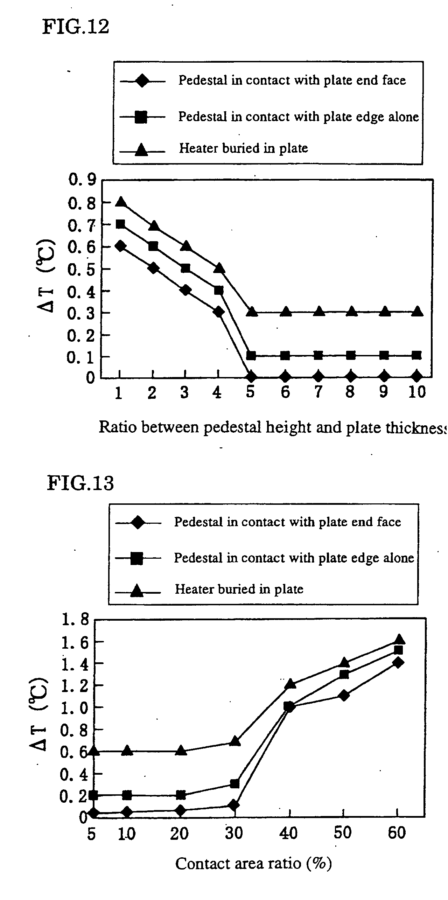

FIG 12 shows the relation between the ratio between the pedestal height L and plate thickness the difference ΔT in the example 2. As will be known from FIG 12, the relation is quite the same as in the example 1.

FIG 13 shows the relation between the contact area ratio and ΔT in the example 3. The example 3 showed almost the same tendency as the examples 1 and 2 although it used a pedestal whose contact area ratio was within the range of 10 to 60 %.

Note that as seen from FIGS. 9, 11 and 13, the difference ΔT was smaller when the pedestal 5 was in contact with the edge of the plate. Also, when the contact area ratio is over 30%, the difference ΔT is larger.

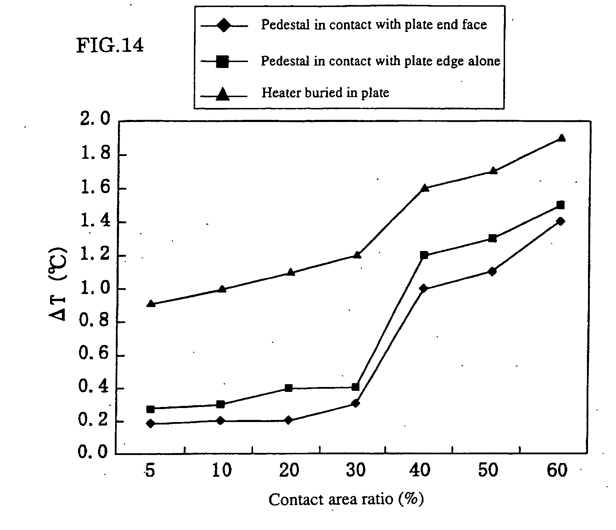

FIG 14 shows the relation between the contact area ratio and ΔT in the example 4. As seen, the example 4 showed almost the same tendency as the examples 1 to 3 although it used a pedestal whose contact area ratio was within the range of 10 to 60 %.

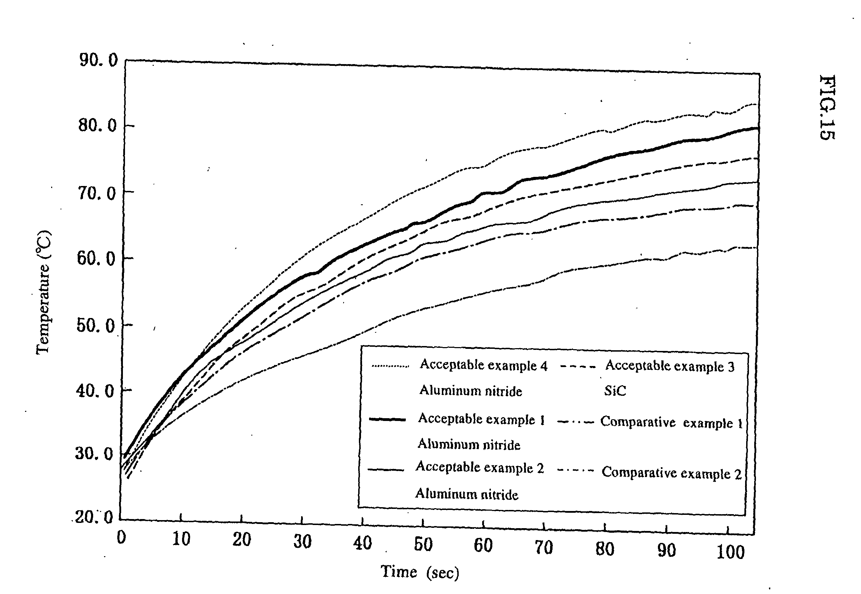

Further, an example in which the contact area ratio was under 30% was selected from of each of the above four examples 1 to 4 (these selected examples will be referred to as "acceptable examples 1 to 4" hereunder), and also an example in which the contact area ratio was over 30% was selected from each of the examples 1 and 2 (these selected examples will be referred to as "comparative examples 1 and 2" hereunder). These selected acceptable and comparative examples were tested for the plate-surface temperature elevation rate. The test results are shown in Table 1 and FIG 15.
- Acceptable example 1:: 635.04 mm² in contact area, and 25.1 % in contact area ratio
- Acceptable example 2:: 750 mm² in contact area, and 29.6% in contact area ratio
- Acceptable example 3:: 533.6 mm² in contact area, and 21.1% in contact area ratio
- Acceptable example 4:: 256 mm² in contact area (64 mm² × 4), and 10.1 % in contact area ratio
- Comparative example 1:: 2052 mm² in contact area, and 81.1% in contact area ratio
- Comparative example 2:: 811 mm² in contact area, and 32.1% in contact area ratio

The above temperature elevation test was done at the normal temperature (about 25°C). The prepared module was placed on a heat-resistant resin plate (phenyl Bakelite), a thermo-sensor was installed to the module surface, and the temperature (°C) was measured for an energization time length (sec) after a power of 8 W was supplied to the ceramic heater.

**Table 1**

| | Material | Contact area ratio (%) | Plate-surface temperature in 60 sec (°C) |
|---|---|---|---|
| Acceptable example 1 | Aluminum nitride | 25.1 | 76.2 |
| Acceptable example 2 | Aluminum nitride | 29.6 | 71.2 |
| Acceptable example 3 | Silicon carbide | 21.1 | 66.2 |
| Acceptable example 4 | Aluminum nitride | 10.1 | 68.9 |
| Comparative example 1 | Aluminum nitride | 80.1 | 56.1 |
| Comparative example 2 | Aluminum nitride | 32.1 | 64.1 |

In the acceptable examples 1 to 4 according to the present invention, the plate-surface temperature reached 65°C in 60 sec after start of the heating as will be known from FIG 15. As will also be seen, after having reached 60°C, the temperature rose at a higher rate as compared with those in the comparative examples 1 and 2. Therefore, the temperature rose appropriately. Further, the test results show that the plate-surface temperature elevation in the acceptable example 4 in which the pedestals 5 were in contact with the four comers, respectively, of the plate 2 is best and both the highest temperature and temperature elevation rate are excellent. That is, it can be said that the supporting of the plate 2 on the pedestals 5 which are in contact with the four comers, respectively, is best.

In the comparative examples 1 and 2, however, the plate-surface temperature has no yet reached 65 °C in 60 sec after the start of heating. Also, the plate-surface temperature rises slowly as compared with those in the acceptable examples 1 to 4. Namely, the heat is dissipated from the pedestal, which inhibits the plate-surface temperature from rising.

Table 2 shows the relation between particle count and the ratio in area of contact between the pedestal and plate rear-side in the examples 1 to 4. As seen from Table 2, the particle count decreases considerably when the contact area ratio is less than 30%, especially under 25%.

**Table 2**

| Contact area ratio (%) | Particle count (particles/cm²) |
|---|---|
| 0.5 | 100 |
| 5 | 110 |
| 10 | 120 |
| 15 | 123 |
| 20 | 125 |
| 25 | 123 |
| 30 | 829 |
| 40 | 1320 |
| 50 | 1303 |
| 60 | 2031 |

### Industrial Applicability

As having been described in the foregoing, the temperature control element, and the temperature controller and waveguide type optical module, each using the temperature control element, are superior in homogeneity of the plate-surface temperature distribution of the temperature control element, and in temperature elevation rate. Further, particles can be prevented from being separated in them. Therefore, the present invention can provide a waveguide type optical module having a superb optical waveguide characteristic supporting the multi-channeling, that is, having a stable wavelength demultiplexing characteristic.

## Claims

1. A waveguide type optical module comprising a temperature control element supported on a pedestal inside a casing, and an optical waveguide disposed in contact on the temperature control element, wherein:
the temperature control element includes a plate having a heater or heat absorber provided on a non-heating side thereof or buried therein; and
the plate is supported inside the casing so that the area of contact with the pedestal is less than 30% of the surface area of the plate.

2. The optical module according to claim 1, wherein the pedestal is put into contact with the edge of the plate to support the latter.

3. The optical module according to claim 1 or 2, wherein the pedestal supports the plate in contact with the end face of the latter.

4. The optical module according to any of claims 1 to 3, wherein the plate is made of ceramics.

5. A temperature controller for use in a waveguide type optical module, the temperature controller comprising a temperature control element held inside a casing and which includes a plate having a heater or heat absorber provided on a non-heating side thereof or buried therein; and
there is installed to the plate a pedestal for supporting the plate thereon so that the area of contact with the pedestal and the non-heating side of the plate is less than 30% of the surface area of the plate.

6. The temperature controller for use in a waveguide type optical module according to claim 5, wherein the pedestal is put into contact with the edge of the plate to support the latter.

7. The temperature controller for use in a waveguide type optical module according to claim 5 or 6, wherein the pedestal supports the plate in contact with the end face of the latter.

8. The temperature controller for use in a waveguide type optical module according to any of claims 5 to 7, wherein the plate is made of ceramics.

9. A waveguide type optical module comprising a temperature control element supported on a pedestal inside a casing, and an optical waveguide disposed in contact on the temperature control element, wherein:
the temperature control element includes a generally rectangular plate having a heater or heat absorber provided on a non-heating side thereof or buried therein; and
the pedestal supports the plate thereon in contact with each outer comer of the latter and so that the area of contact between the pedestal and plate is less than 30% of the surface area of the plate.

10. The optical module according to claim 9, wherein in the portion of each pedestal being in contact with the plate, when it is assumed that one side of the plate is α1 while the length of the contacting portion of the pedestal along the one side of the plate is α2, α2 should preferably be 5 to 40 % of α1.

11. The optical module according to claim 9, wherein the total area of the pedestal preferably be within a range of 1 to 25 % of the surface area of the plate.

12. The optical module according to claim 9, wherein the area of each pedestal preferably be within a range of 0.4 to 7 % of the surface area of the plate.

13. The optical module according to claim 9, wherein the pedestal supports the plate in contact with the end face of the latter.

14. The optical module according to claim 9, wherein the plate is made of ceramics.

15. A temperature control element including a plate having a heater or heat absorber provided on a non-heating side thereof or buried therein, wherein the plate is shaped so that the area of contact with a pedestal which support the plate thereon is less than 30% of the surface area of the plate.

16. The temperature control element according to claim 15, wherein the pedestal is put into contact with the edge of the plate to support the latter.

17. The temperature control element according to claim 15 or 16, wherein the pedestal supports the plate in contact with the end face of the latter.

18. The temperature control element according to any of claims 15 to 17, wherein the plate is made of ceramics.
